# FASCICULE DE BREVET EUROPEEN

(11) **EP 1 051 308 B1**
(45) Date de publication et mention de la délivrance du brevet: **22.03.2006**
(21) Numéro de dépôt: 99900982.2
(22) Date de dépôt: 22.01.1999
(51) Int. Cl.: B60K 6/04

(54) **GROUPE MOTOPROPULSEUR HYBRIDE COMPORTANT UN DOUBLE TRAIN EPICYCLOIDAL**
HYBRIDANTRIEBSEINHEIT MIT ZWEI PLANETENRADSÄTZEN
HYBRID ENGINE TRANSMISSION UNIT COMPRISING A DOUBLE PLANETARY GEAR TRAIN

(30) Priorité: 26.01.1998 FR 9800795
(43) Date de publication de la demande: 15.11.2000
(73) Titulaire: Renault s.a.s., 92100 Boulogne Billancourt (FR)
(72) Inventeur: LEHONGRE, Claude, F-75014 Paris (FR)
(86) Numéro de dépôt international: PCT/FR1999/000125
(87) Numéro de publication internationale: WO 1999/037496

(56) Documents cités:
- EP-A- 0 729 858
- EP-A- 0 751 025
- FR-A- 2 734 318
- FR-A- 2 742 703
- US-A- 3 861 484

## Description

L'invention concerne un groupe motopropulseur pour véhicule à motorisation hybride comportant un double train épicycloïdal.

L'invention concerne plus particulièrement un groupe motopropulseur pour véhicule à motorisation hybride fonctionnant suivant plusieurs modes, du type comportant un premier train épicycloïdal qui comporte des éléments tels qu'une première couronne, un premier planétaire, un premier porte-satellites, et au moins un premier satellite, liés en rotation à des organes du groupe motopropulseur tels qu'un arbre de sortie d'un moteur électrique, un arbre de sortie d'un moteur thermique, un arbre du rotor d'un alternateur et une sortie de puissance pour transmettre une puissance motrice à des roues du véhicule, et du type dans lequel un module électronique de gestion de la charge d'une batterie d'accumulateurs commande, notamment en couple et en vitesse, le fonctionnement du moteur électrique et de l'alternateur qui est susceptible d'être mis en charge notamment pour recharger la batterie d'accumulateurs.

On connaît de nombreux exemples de groupes motopropulseurs pour véhicules à motorisation hybride. Ceux-ci relèvent essentiellement de deux groupes, les groupes hybrides série et les groupes hybrides parallèles.

Les hybrides série sont des groupes motopropulseurs dans lesquels un moteur thermique à pistons ou une turbine entraîne un générateur qui produit de l'électricité pour alimenter un ou plusieurs moteurs électriques liés aux roues du véhicule. Une batterie d'accumulateurs permet de stocker l'énergie électrique pour faire fonctionner le moteur électrique.

Les documents FR-A-2.734.318, FR-A1-2 742 703 et EP-A1-0 729 858 décrivent un tel groupe motopropulseur.

Le rendement d'une telle chaîne de transmission de la puissance est bon mais un tel dispositif présente l'inconvénient de nécessiter des organes électriques encombrants et pénalisants en terme de poids embarqué. Les organes utilisés doivent en effet assurer la propulsion du véhicule à toutes les vitesses, ce qui nécessite l'emploi d'organes de dimensions importantes. De plus, en cas de défaillance d'un des organes électriques, le véhicule est immobilisé.

Les hybrides parallèles sont des groupes motopropulseurs dans lesquels un moteur thermique, un moteur électrique alimenté par une batterie d'accumulateurs, et une transmission sont couplés mécaniquement par l'intermédiaire d'un dispositif permettant de les lier en rotation les uns aux autres. II s'agit généralement de dispositifs comportant un train épicycloïdal ou une boîte de vitesse aux éléments desquels sont reliés le moteur électrique, le moteur thermique et la transmission.

Les groupes motopropulseurs de type hybride parallèle présentent l'avantage de pouvoir utiliser les deux types de propulsion thermique et électrique, indépendamment ou simultanément. Les deux moteurs étant couplés l'un à l'autre, le véhicule peut par exemple fonctionner selon un mode purement électrique, ou selon un mode hybride, ou encore selon un mode purement thermique en fonction des conditions d'utilisation, c'est à dire en fonction soit de l'accélération désirée, soit du lieu d'utilisation du véhicule, soit de la vitesse du véhicule. Le passage d'un mode de fonctionnement à un autre est commandé par un module électronique.

Cette disposition permet d'utiliser directement la puissance motrice du moteur thermique pour la propulsion du véhicule, le moteur électrique ne jouant qu'un rôle d'appoint, ce qui permet de n'utiliser que des organes électriques de dimensions et de poids réduits.

Un des rôles dévolus au moteur thermique est de recharger la batterie d'accumulateurs par l'intermédiaire du moteur électrique qui est alors utilisé en générateur. Un tel groupe motopropulseur ne nécessite donc ni moteur électrique ni batterie d'accumulateurs encombrants. En outre, la possibilité d'utiliser un des moteurs préférentiellement permet d'éviter que le véhicule ne soit immobilisé en cas de défaillance de l'autre moteur. Enfin, le couplage mécanique des organes permet de démarrer le moteur thermique en entraînant son arbre de sortie par le moteur électrique au lieu de le faire de façon conventionnelle avec un démarreur, ce qui permet de réaliser un gain de poids appréciable et de réduire les coûts de production.

D'autres conceptions hybrides sont aussi connues, notamment celles dans lesquelles le moteur électrique et la transmission sont couplés à des éléments du train épicycloïdal, et dans lesquelles un alternateur est aussi couplé mécaniquement au train épicycloïdal à des fins de recharge de la batterie d'accumulateurs. Dans ce type de montage, le groupe motopropulseur dispose dans certains cas des deux sources de rechargement de la batterie d'accumulateurs que sont l'alternateur et le moteur électrique utilisé occasionnellement en générateur de courant.

Un problème se pose néanmoins en ce qui concerne la gestion du couple et de la vitesse de rotation des différents éléments.

Il est connu qu'un moteur thermique ne fonctionne à son meilleur rendement qu'à son régime de couple maximum. Dans un véhicule à propulsion thermique conventionnelle, le moteur thermique est l'unique source de puissance et il est utilisé à différents régimes de rotation pour obtenir différentes vitesses du véhicule. Ce faisant, il ne fonctionne que rarement à son régime de couple maximum, puisqu'il doit, notamment à chaque changement de rapport, relancer le véhicule.

Dans le cas d'un véhicule hybride pour lequel d'une part la recherche d'une faible consommation est prédominante et, d'autre part, pour lequel on peut utiliser un moteur électrique, le problème se pose différemment. Il est admis dans ce cas d'utiliser le moteur thermique comme source de puissance à couple et régime constant, le moteur électrique permettant de fournir l'appoint de puissance nécessaire à l'obtention des accélérations désirées.

Il importe donc que le module électronique puisse réaliser une action de régulation du couple du moteur thermique afin de le faire fonctionner à son régime de couple maximum. Pour ce faire, une solution simple consiste à assurer un pilotage des couples et régimes des autres éléments de la chaîne de propulsion hybride, à savoir le moteur électrique et l'alternateur, à l'aide du module électronique.

Le problème non résolu par les dispositifs existants résulte de l'architecture à un train épicycloïdal pour le couplage des éléments du groupe motopropulseur. En effet, les éléments étant liés mécaniquement les uns aux autres par le train épicycloïdal, leurs couples et vitesses de rotation sont liés les uns aux autres par la loi de composition des vitesses au sein du train épicycloïdal. Ceci est avantageux en termes de transmission de puissance mais pose un problème lorsqu'un élément assure des fonctions de commande. Par exemple, dans l'architecture décrite ci-dessus, l'alternateur est susceptible de fournir un couple résistant à l'un des éléments du train épicycloïdal pour que la transmission du couple moteur s'effectue par l'engrènement des deux autres éléments du train épicycloïdal, notamment lorsque le module électronique commande le démarrage du moteur thermique par entraînement de son arbre de sortie. Le couple résistant fourni par l'alternateur est alors utilisé à des fins de commande, mais il n'est pas directement utilisé pour la propulsion du véhicule.

De même, lorsque le véhicule est propulsé simultanément par le moteur électrique et le moteur thermique, l'état de charge de la batterie d'accumulateurs peut être suffisant pour ne pas imposer un fonctionnement de l'alternateur. Il n'est dans ce cas pas nécessaire de l'entraîner, car sa rotation provoque inévitablement des pertes mécaniques.

Enfin, le nombre limité de trois entrées ou sorties de puissance d'un train épicycloïdal entraîne inévitablement le couplage mécanique de deux organes du groupe motopropulseur sur un seul élément du train épicycloïdal, ce qui est généralement réalisé par une liaison du moteur électrique au pont par l'intermédiaire d'un des éléments du train épicycloïdal. Dans une telle configuration, un mode de recharge de la batterie d'accumulateurs du véhicule à l'arrêt ne peut se faire qu'à l'aide de l'alternateur, ce qui pénalise grandement les temps de charge. Si l'on souhaite pouvoir utiliser le moteur électrique en générateur de courant, il importe de pouvoir le désolidariser du pont.

Pour répondre à ces impératifs de découplage des organes, l'invention propose un groupe motopropulseur du type mentionné précédemment, caractérisé en ce que le groupe motopropulseur comporte un second train épicycloïdal qui comporte des éléments tels qu'une seconde couronne, un second planétaire, un second porte-satellites, et au moins un second satellite, dont l'un est lié en rotation à l'arbre de sortie du moteur électrique, et dont les autres sont liés à la sortie de puissance du premier train épicycloïdal et au pont pour transmettre la puissance motrice aux roues du véhicule, et en ce que le module électronique commande le fonctionnement du moteur thermique et de moyens de blocage de l'arbre de sortie du moteur thermique.

Selon d'autres caractéristiques de l'invention :
- les moyens de blocage de l'arbre de sortie du moteur thermique comportent un frein agissant selon un mode actif de blocage et un mode inactif sur un volant moteur lié en rotation à l'arbre de sortie du moteur thermique ;
- le premier train épicycloïdal est coaxial au second train épicycloïdal, le premier porte-satellites est lié en rotation au second planétaire, et la première couronne est liée en rotation à la seconde couronne ;
- la première couronne et la seconde couronne forment une couronne commune et en ce que le premier porte-satellites et le second planétaire forment un moyeu commun ;
- la couronne commune aux deux trains épicycloïdaux est liée en rotation à l'arbre de sortie du moteur électrique, le premier planétaire est lié en rotation à l'arbre du rotor de l'alternateur, le moyeu commun est lié à l'arbre de sortie du moteur thermique, et le second porte-satellites est lié en rotation aux roues du véhicule ;
- le module électronique est susceptible de commander un mode de fonctionnement électrique pur dans lequel le frein du volant moteur est actif et l'alternateur n'est pas en charge ;
- le module électronique est susceptible de commander un mode de fonctionnement de démarrage du moteur thermique par le moteur électrique dans lequel le frein du volant moteur est inactif et l'alternateur est en charge ;
- le module électronique est susceptible de commander un mode de fonctionnement hybride libre dans lequel les deux moteurs sont en marche, le frein du volant moteur est inactif et l'alternateur est en charge ;
- le module électronique est susceptible de commander, lorsque le véhicule est arrêté, un mode de fonctionnement de recharge de la batterie d'accumulateurs dans lequel le moteur thermique est en marche et le frein du volant moteur est inactif, l'alternateur est en charge et le moteur électrique est utilisé comme générateur de courant ;
- le groupe motopropulseur comporte un frein de blocage de l'arbre du rotor de l'alternateur qui est susceptible d'être commandé selon un mode actif de blocage et selon un mode inactif par le module électronique ;
- le module électronique est susceptible de commander un mode de fonctionnement hybride bloqué dans lequel les deux moteurs sont en marche, le frein du volant moteur est inactif, le frein de l'arbre du rotor de l'alternateur est actif, et l'alternateur est en charge ;
- la liaison en rotation de l'arbre du sortie du moteur électrique à la couronne et la liaison en rotation du second porte-satellites au pont sont réalisées par l'intermédiaire d'organes de transmissions tels des courroies crantées ou des chaînes ;
- le groupe motopropulseur comporte un carter commun qui reçoit les deux trains épicycloïdaux, les organes de transmission, un pont, et sur lequel sont fixés le moteur électrique, l'alternateur, et le moteur thermique.

D'autres caractéristiques et avantages de l'invention apparaîtront à la lecture de la description détaillée qui suit pour la compréhension de laquelle on se reportera aux dessins annexés dans lesquels :
- la figure 1 est un schéma de principe d'un groupe motopropulseur suivant l'invention, comportant une batterie d'accumulateurs, un module électronique, deux moteurs électrique et thermique, un alternateur, un frein de blocage associé à l'alternateur et un frein de blocage associé au moteur thermique ;
- la figure 2 est une vue en coupe axiale du double train épicycloïdal du groupe motopropulseur réalisé suivant l'invention ;
- la figure 3 est une représentation schématique du fonctionnement des organes impliqués dans la chaîne de transmission de la puissance d'un groupe motopropulseur suivant l'invention représenté en un mode de fonctionnement électrique pur sur laquelle les flèches grisées continues indiquent les couples fournis, reçus, et transmis par les différents organes du groupe motopropulseur ;
- la figure 4 est une représentation analogue à celle de la figure 3 représentant un groupe motopropulseur suivant l'invention représenté en un mode de fonctionnement de démarrage du moteur thermique ;
- la figure 5 est une représentation analogue à celle de la figure 2 représentant un groupe motopropulseur suivant l'invention représenté en un mode de fonctionnement hybride libre, l'alternateur tournant pour recharger la batterie d'accumulateurs ;
- la figure 6 est une représentation analogue à celle de la figure 2 représentant un groupe motopropulseur suivant l'invention représenté en un mode de fonctionnement hybride bloqué, l'alternateur étant bloqué, le moteur thermique transmettant son couple au pont, et le moteur électrique étant susceptible de fournir un couple d'appoint représenté par une flèche grisée discontinue ; et
- la figure 7 est une représentation analogue à celle de la figure 2 représentant un groupe motopropulseur suivant l'invention représenté en un mode de fonctionnement à l'arrêt du véhicule permettant la recharge de la batterie d'accumulateurs.

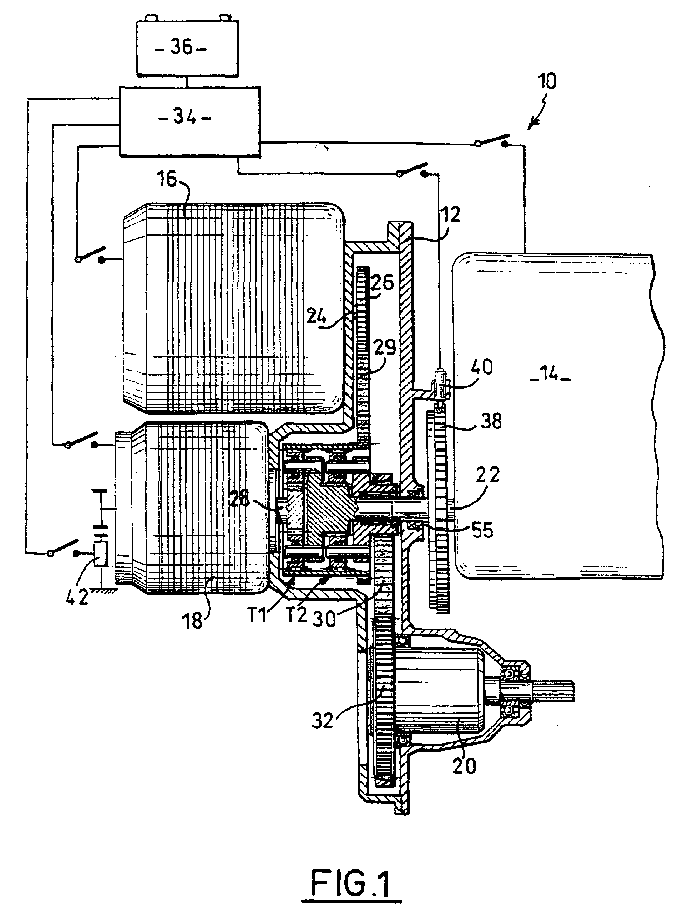

On voit sur la figure 1 l'ensemble d'un groupe motopropulseur 10 pour véhicule à motorisation hybride réalisé suivant l'invention. Le groupe motopropulseur 10 comporte différents organes tels qu'un moteur thermique 14, un moteur électrique 16, un alternateur 18, deux trains épicycloïdaux T1, T2, et un pont 20 qui permet de transmettre le couple aux roues du véhicule. Ces différents organes sont agencés autour et à l'intérieur d'un carter 12 qui abrite les trains épicycloïdaux T1 et T2.

Les trains épicycloïdaux T1 et T2 comportent respectivement des éléments tels qu'une première couronne C1, un premier planétaire P1, un premier porte-satellites PS1, des premiers satellites S1 d'une part, et une seconde couronne C2, un second planétaire P2, un second porte-satellites PS2 et des seconds satellites S2 d'autre part.

Ces éléments sont liés en rotation au moteur thermique 14, au moteur électrique 16, à l'alternateur 18, et au pont 20.

Les trains épicycloïdaux T1, T2 sont liés en rotation au moteur thermique 14 par l'intermédiaire d'un arbre de sortie 22 du moteur thermique, au moteur électrique 16 par l'intermédiaire d'une courroie de transmission 28 qui engrène avec un pignon 26 porté par un arbre de sortie 24 du moteur électrique 16, à l'alternateur par un arbre de sortie 28 du rotor (non représenté) de l'alternateur 18, et au pont 20 par une courroie de transmission 30 qui engrène avec un pignon d'entrée 32 du pont 20.

Le groupe motopropulseur 10 comporte un module électronique de commande et de gestion 34 qui est relié à une batterie d'accumulateurs 36, et qui commande le fonctionnement du moteur thermique 14, du moteur électrique 16 et de l'alternateur 18 en pilotant notamment leur(s) couple(s) et leur(s) vitesse(s) de rotation.

Conformément à l'invention, l'arbre de sortie 22 du moteur thermique 14 comporte un volant 38 qui est susceptible d'être bloqué par un frein de blocage 40 commandé par le module électronique 34. D'une façon analogue, l'arbre de sortie 28 du rotor (non représenté) de l'alternateur 18 est susceptible d'être bloqué par un frein de blocage 42, lui aussi commandé par le module électronique 34. Ces freins de blocage 40 et 42 permettent de bloquer indirectement certains éléments des trains épicycloïdaux T1, T2.

Cette configuration est particulièrement avantageuse car le groupe motopropulseur ne comporte, contrairement à d'autres constructions, qu'un moteur électrique. Les coûts de fabrication, incluant les coûts de l'alternateur et de l'électronique associée, en sont d'autant diminuée.

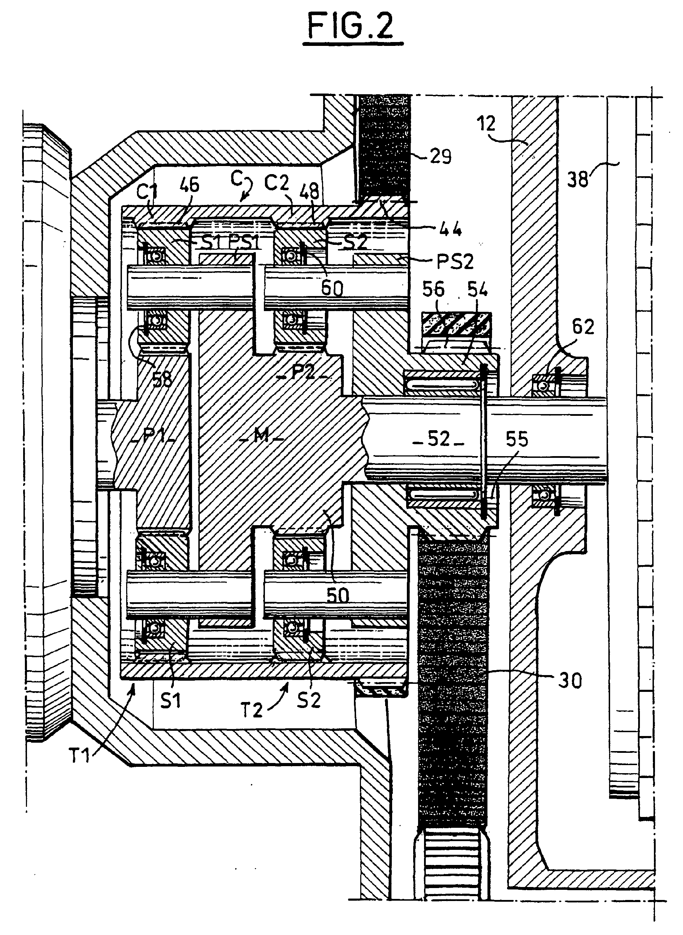

On voit sur la figure 2 le détail de l'agencement coaxial des trains épicycloïdaux T1 et T2. Conformément à l'invention, les couronnes respectives C1 et C2 des train épicycloïdaux T1 et T2 forment une couronne commune C qui engrène par un jeu de dentures extérieures 44, avec la courroie crantée de transmission 29 qui est entraînée par le moteur électrique 16.

La couronne C comporte deux jeux de dentures intérieures 46 et 48 qui engrènent respectivement avec les satellites S1 du train épicycloïdal T1 et les satellites S2 du train épicycloïdal T2. Les satellites S1 engrènent avec le planétaire P1 qui est lié en rotation à l'arbre de sortie 28 de l'alternateur 18, et ils sont portés par un porte-satellites PS1 qui appartient à un moyeu M dont une partie 50 adjacente axialement constitue le planétaire PS2 du train épicycloïdal T2, et dont une partie adjacente 52 est liée en rotation à l'arbre de sortie 22 du moteur thermique 14.

Par ailleurs, le porte-satellites PS2 du train épicycloïdal T2 comporte sur une partie 54 un jeu de dentures 56 qui engrènent avec la courroie de transmission 30 qui entraîne le pont 20 pour transmettre le mouvement aux roues du véhicule.

Le porte-satellites PS2 comporte, dans un alésage 55 de sa partie 54, un palier qui permet le guidage en rotation du moyeu M formant le porte-satellites PS1 du train épicycloïdal T1 et le planétaire P2 du train épicycloïdal T2. La couronne C étant de grande longueur, les satellites S1 et S2 sont montés sur les arbres des porte-satellites PS1 et PS2 à l'aide de roulements à billes 58 et 60 qui autorisent de faibles débattements angulaires des satellites S1, S2 et permettent d'éviter tout risque de blocage.

Le moyeu M traverse par ailleurs le carter 12, son arbre de sortie 52 étant porté par un palier 62 comportant lui aussi un roulement à billes permettant de légers débattements angulaires du moyeu M.

Avantageusement, les deux trains épicycloïdaux sont couplés d'une part par la couronne C, qui permet à l'ensemble des deux trains épicycloïdaux T1, T2 de présenter un encombrement radial réduit et, d'autre part, par le moyeu M formant porte-satellites PS1 et planétaire P2, qui permet d'obtenir un encombrement longitudinal réduit.

Ce dispositif est aussi particulièrement avantageux en termes de maintenance puisque les deux trains épicycloïdaux T1 et T2 sont agencés dans la couronne C, ce qui permet, en cas de défaillance, un démontage simple et rapide de l'ensemble des trains épicycloïdaux T1 et T2 et ceci d'autant plus aisément que leurs moyens de liaison au moteur électrique 16 et au pont 20 sont les courroies 28 et 30.

De même, le moyeu M peut être facilement désaccouplé de l'arbre de sortie 22 du moteur thermique 14 par une fixation au niveau du volant 38.

Dans la description des dessins annexés 3 à 7 qui suivent, on se référera aux numérotations des figures 1 et 2 pour les éléments de détail de l'invention déjà décrits.

Pour aider à la compréhension des figures et des différents modes de fonctionnement, on a adopté une représentation schématique du raccordement du module 34 aux différents organes par l'intermédiaire de liaisons comportant des commutateurs qui, selon qu'ils sont en position ouverte ou fermée, permettent au lecteur d'identifier quels sont les organes qui sont commandés, alimentés et/ou en charge.

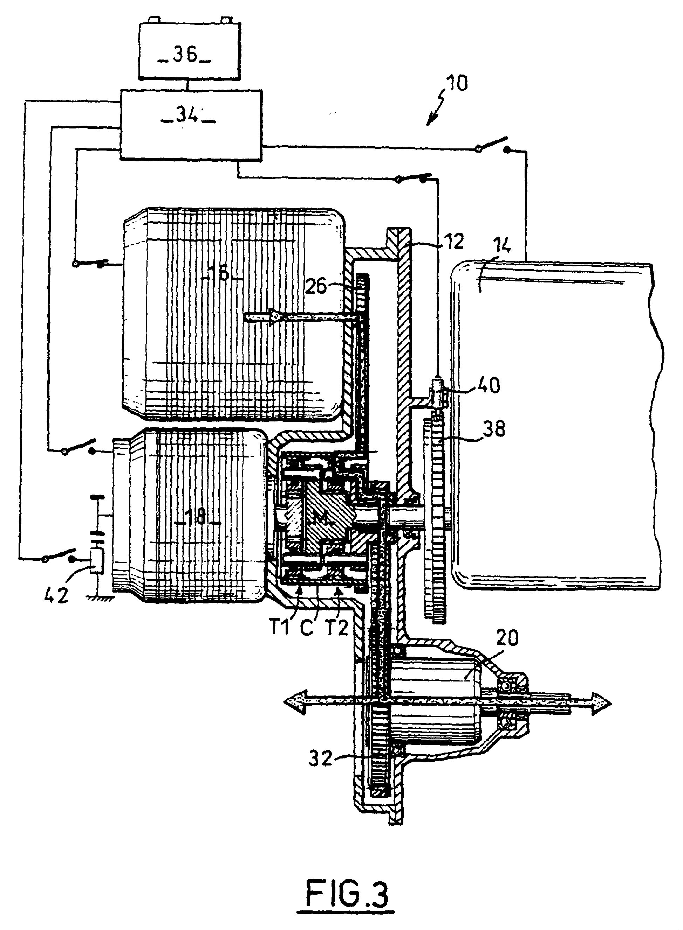

Conformément à l'invention, la figure 3 illustre le fonctionnement du groupe motopropulseur 10 en un mode électrique pur. Dans cette configuration, le moteur électrique 16 est commandé par le module électronique 34 et fournit un couple à la couronne C des deux trains épicycloïdaux T1,T2 par l'intermédiaire de son pignon de sortie 26 monté sur son arbre de sortie 24 et de la courroie de transmission 28. Pour éviter que le moteur thermique 14 ne soit entraîné en pure perte, le frein 40 du volant 38 est actif et bloque l'arbre de sortie 22 du moteur thermique. Par voie de fait, le moyeu M est immobile et les satellites S1 tournent librement autour de leurs axes car l'alternateur 18 n'est pas en charge et l'arbre de sortie 28 de l'alternateur n'est pas freiné, le frein 42 étant inactif.

Le couple est donc transmis de l'arbre de sortie 24 du moteur électrique 16 au pignon de sortie 26, à la courroie de transmission 28, à la couronne C, puis au satellite S2 par son jeu de dentures intérieures 48, au porte-satellites PS2 dont la denture 56 permet de transmettre le couple à la courroie de transmission 30 qui entraîne le pont 20 par l'intermédiaire du pignon 32.

Cette configuration est particulièrement intéressante, car elle permet de bloquer totalement le moteur thermique 14 et donc d'éviter que ne se produisent des pertes mécaniques en entraînant à vide le moteur thermique 14.

Par ailleurs, l'arbre 22 du moteur thermique 14 étant bloqué le premier train épicycloïdal constitue un réducteur de vitesse entre le moteur électrique et les roues du véhicule.

Enfin, l'alternateur 18 étant hors charge et libre de tourner, seule une partie négligeable du couple lui est transmise.

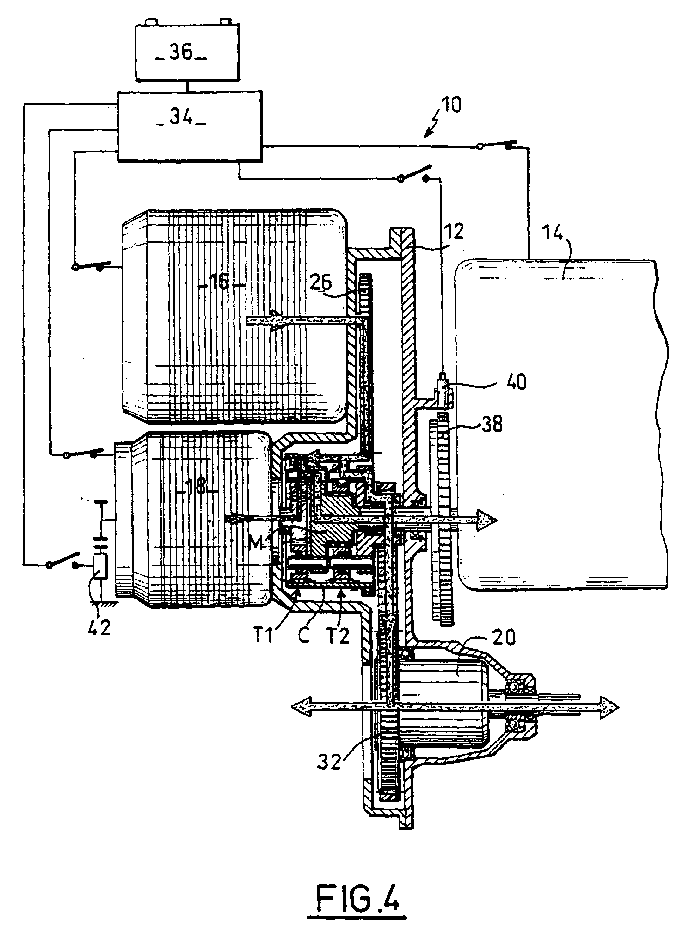

On voit sur la figure 4 une illustration du groupe motopropulseur 10 en mode de démarrage du moteur thermique 14.

Ce mode de fonctionnement intervient à l'issue d'un fonctionnement en mode électrique pur dont il reprend les principaux aspects, et il permet, une fois le véhicule lancé de démarrer le moteur thermique 14 à l'aide du moteur électrique 16 et de l'inertie du véhicule qui entraîne le pont 20.

Dans cette configuration, le module électronique 34 commande la mise en charge de l'alternateur 18, ce qui a pour effet d'opposer un couple résistant au planétaire P1. Par ailleurs, le frein de blocage 40 du volant 38 du moteur thermique 14 est inactif, et le module électronique 34 gère tous les paramètres nécessaires au fonctionnement du moteur thermique 14, comme la mise sous tension de l'allumage, l'alimentation en carburant, l'alimentation du dispositif d'injection, etc.

Dans cette configuration, le couple est transmis, comme précédemment évoqué en référence à la figure 3, du moteur électrique 16 à la couronne C de l'ensemble des trains épicycloïdaux T1 et T2 et, le moyeu M étant libre de tourner en même temps que le planétaire P1 et opposant un couple résistant sur les satellites S1, une partie du couple en provenance du moteur électrique 16 est transmise au moyeu M par réaction des satellites S1 sur le planétaire P1. La rotation du moyeu M entraîne l'arbre de sortie 22 du moteur thermique 14 qui peut alors démarrer. Au fur et à mesure que le moteur thermique 14 prend de la vitesse, la vitesse de rotation du moyeu M augmente, et le couple résistant opposé par l'alternateur 18 diminue.

Cette disposition permet avantageusement de démarrer le moteur thermique 14 en se dispensant d'utiliser un démarreur conventionnel. L'alternateur 18 est ici utilisé comme un ralentisseur dont la fonction est essentiellement une fonction de commande. En effet, la mise en charge de l'alternateur, si elle permet néanmoins une production de courant, a essentiellement pour objectif de ralentir la rotation du planétaire P1 pour permettre l'entraînement du moyeu M et donc de l'arbre de sortie 22 du moteur thermique.

Cette configuration permet par ailleurs de ne pas utiliser le frein d'alternateur 42, qui aurait pour effet, s'il était actif, de permettre d'entraîner aussi le moyeu M, mais risquerait de provoquer une détérioration des dentures lorsque, le moteur thermique 14 démarrant, le moyeu M aurait atteint une vitesse de rotation sensiblement égale à celle de la couronne C.

Enfin, la liaison du pont 20 au porte-satellites PS2 permet d'utiliser l'inertie du véhicule comme source de couple qui peut être transmise à la couronne C pour entraîner, par l'intermédiaire des satellites S1 et du moyeu M, l'arbre de sortie 22 du moteur thermique 14 pour son démarrage. Cette particularité d'utilisation permet de limiter la puissance électrique consommée par le moteur électrique 16 et donc d'augmenter l'autonomie de la batterie d'accumulateurs 36.

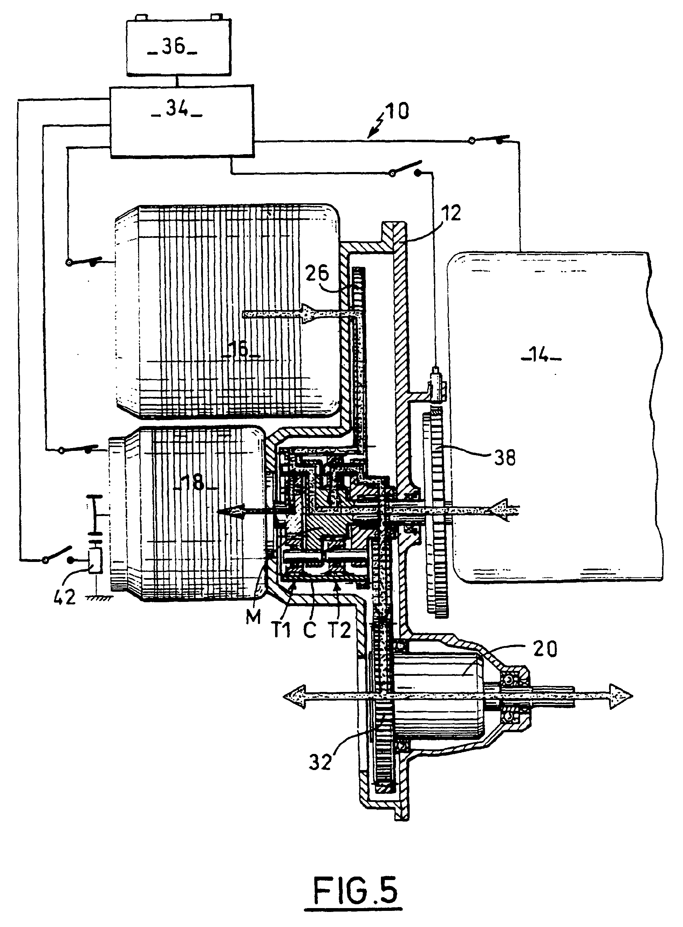

La figure 5 illustre une configuration du groupe motopropulseur 10 en mode de fonctionnement hybride libre. Dans cette configuration, le groupe motopropulseur 10 présente un fonctionnement similaire à celui décrit en référence à la figure 4, à cette différence près que le moteur thermique 14 est en marche et fournit un couple à son arbre de sortie 22, et par suite au moyeu M.

Ce couple est réparti par les satellites S1 d'une part entre la couronne C commune aux trains épicycloïdaux T1 et T2 et, d'autre part, au planétaire P1 lié en rotation à l'arbre de rotor 28 de l'alternateur 18.

Ainsi, le couple résistant de l'alternateur 18 est surmonté pour produire du courant qui permet, grâce à la gestion par le module électronique 34, de recharger la batterie d'accumulateurs 36. Par ailleurs, le couple fourni par le moteur électrique 14 au moyeu M se combine au niveau de la couronne C commune aux trains épicycloïdaux T1 et T2 au couple fourni par le moteur électrique 16 pour être transmis au satellite S2, au porte-satellites PS2 et par suite au pont 20.

Cette disposition est particulièrement avantageuse car elle permet d'assurer la propulsion du véhicule par une source de couple d'origine thermique et une source de couple d'origine électrique, le module électronique 34 assurant l'optimisation des performances du groupe motopropulseur 10. En effet, le module électronique 34 commande l'alimentation du moteur électrique 16 qu'il peut réguler en couple et vitesse d'une part, et assure aussi la régulation en couple, et par suite en vitesse, de l'alternateur 18, ce qui permet de répartir le couple fourni par le moteur thermique 14 de façon adéquate en jouant sur les possibilités de répartition du train épicycloïdal T1. Ainsi, le moteur thermique 14 peut être maintenu à son régime de couple maximum et de meilleur rendement. Le rendement de la chaîne de traction en est d'autant optimisé. On dispose dans ce mode d'utilisation des mêmes possibilités de pilotage du moteur thermique qu'un hybride série, ce qui est avantageux en terme d'optimisation des consommations et de la pollution en agglomération, sans toutefois en présenter les inconvénients, puisqu'une partie de la puissance du moteur thermique est transmise aux roues. La transmission directe d'une partie de cette puissance permet d'employer des machines électriques de taille réduite.

Par ailleurs, ce mode de fonctionnement permet d'assurer simultanément la propulsion du véhicule et la recharge de la batterie d'accumulateurs 36, l'alternateur 18 étant mis en charge.

On peut enfin admettre de ne pas utiliser le moteur thermique 14 à son régime de couple maximum et de meilleur rendement si l'état de charge de la batterie d'accumulateurs impose de privilégier le régime de rotation correspondant au meilleur rendement de l'alternateur.

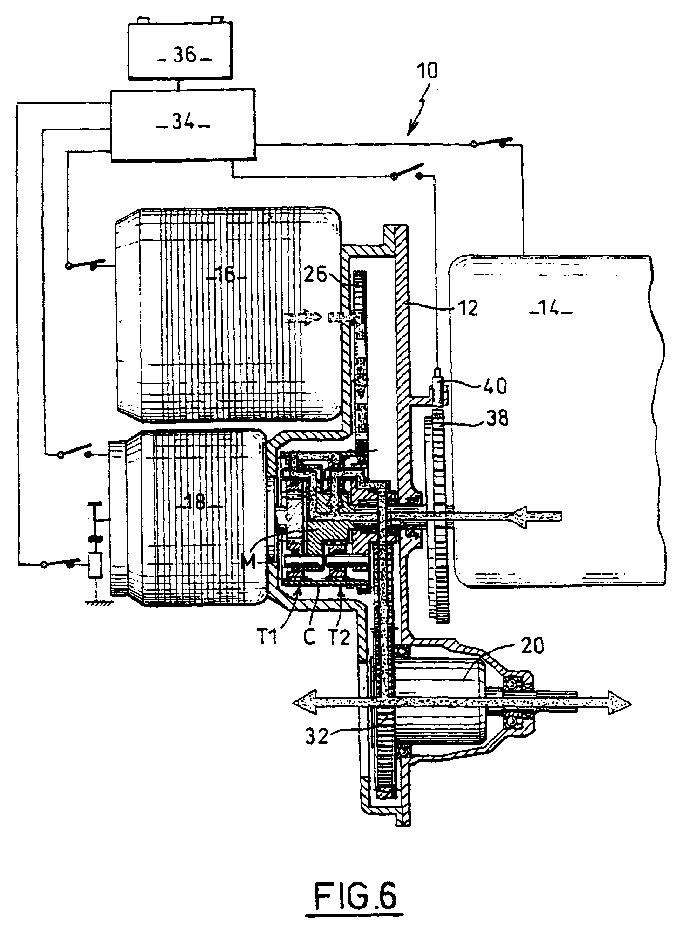

La figure 6 illustre une configuration dans laquelle le groupe motopropulseur 10 fonctionne suivant un mode hybride bloqué. Cette configuration diffère de la précédente par le fait que le frein 42 de l'arbre du rotor 28 de l'alternateur 18 est bloqué. Dans ce cas, le couple en provenance du moteur thermique 14, transmis au moyeu M, est intégralement transmis à la couronne C par l'intermédiaire des satellites S1 qui roulent sur le planétaire P1 de l'arbre de sortie 28 d'alternateur qui est bloqué. Il peut éventuellement s'ajouter au couple fourni par le moteur électrique 16, si les besoins de l'utilisateur imposent son fonctionnement, et il est transmis au porte-satellites PS2 du deuxième train épicycloïdal T2 par l'intermédiaire des satellites S2, puis est transmis au pont 20.

Cette configuration est particulièrement intéressante car elle permet de transmettre l'intégralité du couple fourni par le moteur thermique 14 au pont 20, notamment dans certaines conditions d'utilisation, comme un parcours routier ou autoroutier. Le fonctionnement du véhicule équipé d'un tel groupe motopropulseur est celui d'un hybride parallèle, d'un excellent rapport de consommation sur route et sur autoroute, car le couple du moteur thermique peut être contrôlé par le moteur électrique malgré le blocage de l'arbre du rotor de l'alternateur. La possibilité d'utiliser le moteur électrique 16 comme source de couple d'appoint permet au groupe motopropulseur 10 d'imprimer de fortes accélérations au véhicule. Au contraire, le moteur électrique peut aussi, s'il est placé en charge, être utilisé pour recharger la batterie et servir de frein.

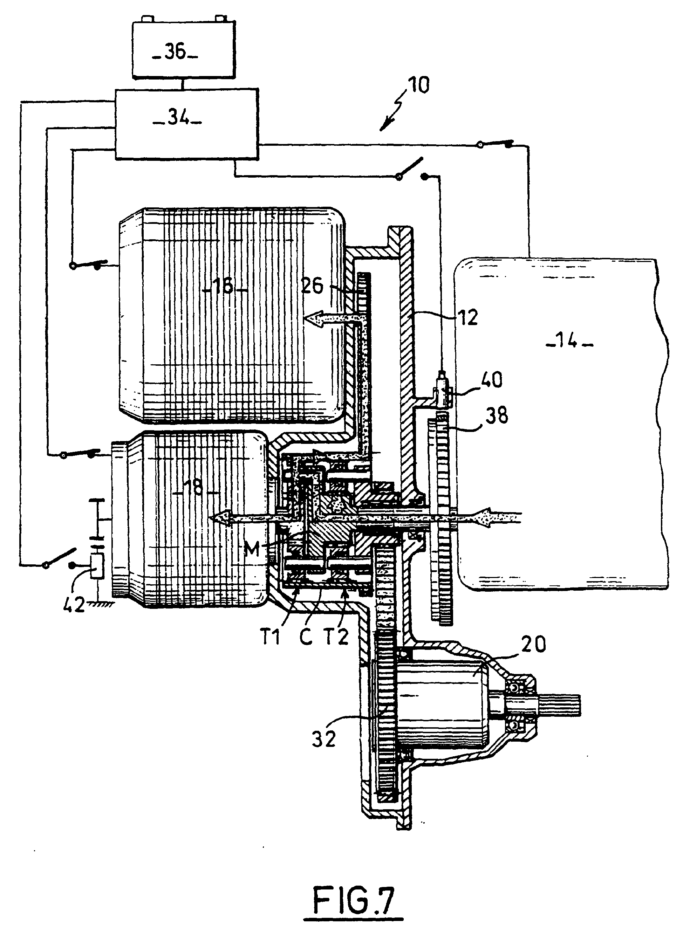

La figure 7 illustre une configuration dans laquelle le groupe motopropulseur 10 fonctionne suivant un mode de recharge de la batterie d'accumulateurs 36. Dans cette configuration, le véhicule est à l'arrêt et, par suite, le pont 20 et le porte-satellites PS2 du train épicycloïdal T2 sont immobilisés en rotation. Le moteur thermique 14 transmet son couple au moyeu M, lequel couple est transmis en partie à l'alternateur 18 par l'engrènement des satellites S1 avec le planétaire P1 et, pour une autre part, au moteur électrique 16 par l'engrènement de la couronne C avec la courroie de transmission 28 qui entraîne en rotation l'arbre de sortie 24 du moteur électrique 16.

Le module électronique 34 commande alors l'utilisation du moteur électrique 16 en générateur et la recharge de la batterie d'accumulateurs 36 est d'autant améliorée que le moteur électrique 16 joue un rôle de générateur analogue à celui de l'alternateur 18.

Le module électronique 34 détermine, en fonction de la vitesse de rotation des éléments mis en jeu, pour quelle part le moteur électrique 16 et l'alternateur 18 doivent intervenir dans la recharge en régulant le couple qui leur est fourni. En effet, pour le moteur électrique 16 comme pour l'alternateur 18, le couple résistant qu'ils opposent au mouvement de rotation est fonction de la tension que le module électronique délivre à leurs stators.

Cette configuration est particulièrement avantageuse car elle permet de recharger rapidement la batterie d'accumulateur 36 à un rythme plus élevé qu'en aucun des modes précédents, ceci afin de procéder à une recharge rapide lorsque l'autonomie de la batterie est épuisée et que les conditions d'utilisation, notamment en agglomération, imposent l'utilisation du groupe motopropulseur 10 en fonctionnement électrique pur.

Plus généralement, cette architecture de groupe motopropulseur hybride est particulièrement avantageuse car elle permet de passer d'un mode de fonctionnement à l'autre sans manipulation d'ensembles mécaniques lourds risquant de provoquer des désagréments d'utilisation. Ainsi, par exemple, le passage du mode électrique pur au mode de démarrage du moteur thermique 14 s'effectue par la simple commutation de l'alternateur 18 en position de charge, la position de mode hybride libre est obtenue dès que le moteur thermique 14 a démarré et un simple blocage du frein 42 de l'alternateur 18 permet au groupe motopropulseur 10 d'adapter un mode de fonctionnement en hybride bloqué. Le mode de recharge de la batterie d'accumulateurs 36 peut quant à lui être obtenu très simplement à partir d'une position d'arrêt, le véhicule étant initialement en mode de propulsion électrique pur.

Ce groupe motopropulseur est aussi particulièrement avantageux car l'emploi d'une architecture à deux trains épicycloïdaux permet de fournir deux rapports de réduction différents entre le moteur thermique ou électrique et les roues, ce qui permet d'employer des moteurs de tailles appropriées et réduites au strict minimum, avec pour conséquence un gain de poids notable. En outre, le choix d'un rapport de réduction par blocage des éléments des trains épicycloïdaux permet d'offrir au véhicule une large gamme de vitesses, de la vitesse nulle à la vitesse maximum atteinte en mode de fonctionnement hybride bloqué.

## Revendications

1. Groupe motopropulseur (10) pour véhicule à motorisation hybride fonctionnant suivant plusieurs modes, du type comportant un premier train épicycloïdal (T1) qui comporte des éléments tels qu'une première couronne (C1), un premier planétaire (P1), un premier porte-satellites (PS1), et au moins un premier satellite (S1), liés en rotation à des organes du groupe motopropulseur (10) tels qu'un arbre de sortie (24) d'un moteur électrique (16), un arbre de sortie (22) d'un moteur thermique (14), un arbre (28) du rotor d'un alternateur (18) et une sortie de puissance (PS1) pour transmettre la puissance motrice aux roues du véhicule par l'intermédiaire d'un pont (20) et du type dans lequel un module électronique (34) de gestion de la charge d'une batterie d'accumulateurs (36) commande, notamment en couple et en vitesse, le fonctionnement du moteur électrique (16) et de l'alternateur (18) qui est susceptible d'être mis en charge pour recharger la batterie d'accumulateurs (36),
**caractérisé en ce que** le groupe motopropulseur (10) comporte un second train épicycloïdal (T2) qui comporte des éléments tels qu'une seconde couronne (C2), un second planétaire (P2), un second porte-satellites (PS2), et au moins un second satellite (S2), dont l'un (C2) est lié en rotation à l'arbre de sortie (24) du moteur électrique (16), et dont les autres sont liés à la sortie de puissance (PS1) du premier train épicycloïdal (T1) et au pont (20), et **en ce que** le module électronique (34) commande le fonctionnement du moteur thermique (14) et des moyens de blocage de l'arbre de sortie (22) du moteur thermique.

2. Groupe motopropulseur (10) selon la revendication 1 , **caractérisé en ce que** les moyens de blocage de l'arbre de sortie (22) du moteur thermique (14) comportent un frein (40) agissant selon un mode actif de blocage et un mode inactif sur un volant moteur (38) lié en rotation à l'arbre de sortie (22) du moteur thermique (14).

3. Groupe motopropulseur (10) selon l'une des revendications 1 ou 2, **caractérisé en ce que** le premier train épicycloïdal (T1) est coaxial au second train épicycloïdal (T2), **en ce que** le premier porte-satellites (PS1) est lié en rotation au second planétaire (P2) et **en ce que** la première couronne (C1) est liée en rotation à la seconde couronne (C2).

4. Groupe motopropulseur (10) selon la revendication 3, **caractérisé en ce que** la première couronne (C1) et la seconde couronne (C2) forment une couronne commune (C) et èn ce que le premier porte-satellites (PS1) et le second planétaire (P2) forment un moyeu commun (M).

5. Groupe motopropulseur (10) selon la revendication 4, **caractérisé en ce que** la couronne (C) commune aux deux trains épicycloïdaux (T1, T2) est liée en rotation à l'arbre de sortie (24) du moteur électrique (16), le premier planétaire (P1) est lié en rotation à l'arbre (28) du rotor de l'alternateur (18), le moyeu commun (M) est lié à l'arbre de sortie (22) du moteur thermique (14), et le second porte-satellites (PS2) est lié en rotation aux roues du véhicule.

6. Groupe motopropulseur (10) selon la revendication 5 prise en combinaison avec la revendication 2, **caractérisé en ce que** le module électronique (34) est susceptible de commander un mode de fonctionnement électrique pur dans lequel le frein (40) du volant moteur (38) est actif et l'alternateur (18) n'est pas en charge.

7. Groupe motopropulseur (10) selon la revendication 5 prise en combinaison avec la revendication 2, **caractérisé en ce que** le module électronique (34) est susceptible de commander un mode de fonctionnement de démarrage du moteur thermique (14) par le moteur électrique (16) dans lequel le frein (40) du volant moteur (38) est inactif et l'alternateur (18) est en charge.

8. Groupe motopropulseur (10) selon la revendication 5 prise en combinaison avec la revendication 2, **caractérisé en ce que** le module électronique (34) est susceptible de commander un mode de fonctionnement hybride libre dans lequel les deux moteurs (14,16) sont en marche, le frein (40) du volant moteur (38) est inactif et l'alternateur (18) est en charge.

9. Groupe motopropulseur (10) selon la revendication 4, **caractérisé en ce que** le module électronique (34) est susceptible de commander, lorsque le véhicule est arrêté, un mode de fonctionnement de rechargement de la batterie d'accumulateurs (36) dans lequel le moteur thermique (14) est en marche et le frein (40) du volant moteur (38) est inactif, l'alternateur (18) est en charge et le moteur électrique (16) est utilisé comme générateur de courant.

10. Groupe motopropulseur (10) selon l'une quelconque des revendications précédentes, **caractérisé en ce qu'**il comporte un frein de blocage (42) de l'arbre (28) du rotor de l'alternateur (18) qui est susceptible d'être commandé selon un mode actif de blocage et selon un mode inactif par le module électronique (34).

11. Groupe motopropulseur (10) selon la revendication 9 prise en combinaison avec les revendications 2 et 5, **caractérisé en ce que** le module électronique (34) est susceptible de commander un mode de fonctionnement hybride bloqué dans lequel les deux moteurs (14,16) sont en marche, le frein (40) du volant moteur (38) est inactif, le frein (42) de l'arbre du rotor (28) de l'alternateur (18) est actif, et l'alternateur (18) est en charge.

12. Groupe motopropulseur (10) selon la revendication 5, **caractérisé en ce que** la liaison en rotation de l'arbre du sortie du moteur électrique (16) à la couronne (C) et la liaison en rotation du second porte-satellites (PS2) au pont sont réalisés par l'intermédiaire d'organes de transmissions tels des courroies crantées ou des chaînes (28,30).

13. Groupe motopropulseur (10) selon la revendication 12, **caractérisé en ce qu'**il comporte un carter commun (12) qui reçoit les deux trains épicycloïdaux (T1,T2), les organes de transmission (28, 30), un pont (20), et sur lequel sont fixés le moteur électrique (16), l'alternateur (18), et le moteur thermique (14).

## Patentansprüche

1. Antriebsgruppe (10) für ein Fahrzeug mit Hybrid-Motorisierung, welches gemäß mehrerer Modi funktioniert, von der Art, welche ein erstes Umlaufgetriebe (T1) aufweist, das Elemente, wie z.B. einen ersten Kranz (C1), ein erstes Zentralrad (P1), einen ersten Planetenradträger (PS1) und mindestens ein erstes Planetenrad (S1), aufweist, welche in Drehung mit Bauteilen der Antriebsgruppe (10), wie z.B. einer Abtriebswelle (24) eines elektrischen Motors (16), einer Abtriebswelle (22) eines Verbrennungsmotors (14), einer Welle (28) des Rotors eines Generators (18) und einem Leistungsausgang (PS1), zum Übertragen der Antriebsleistung auf die Räder des Fahrzeugs über eine Brücke (20) verbunden sind, und von der Art, bei welcher ein elektronisches Steuerungsmodul (34) für die Aufladung einer Speicherbatterie (36) den Betrieb des elektrischen Motors (16) und des Generators (18), welcher fähig ist, das Wiederaufladen der Speicherbatterie (36) zu übernehmen, insbesondere hinsichtlich des Moments und der Geschwindigkeit steuert,
**dadurch gekennzeichnet, dass** die Antriebsgruppe (10) ein zweites Umlaufgetriebe (T2) aufweist, welches Elemente aufweist, wie z.B. einen zweiten Kranz (C2), ein zweites Zentralrad (P2), einen zweiten Planetenradträger (PS2) und mindestens ein zweites Planetenrad (S2), von denen das eine (C2) in Drehung mit einer Abtriebswelle (24) des elektrischen Motors (16) verbunden ist und von denen die anderen mit dem Leistungsausgang (PS1) des ersten Umlaufgetriebes (T1) und mit der Brücke (20) verbunden sind, und **dadurch**, dass das elektronische Modul (34) den Betrieb des Verbrennungsmotors (14) und von Mitteln zur Blockierung der Abtriebswelle (22) des Verbrennungsmotors steuert.

2. Antriebsgruppe (10) nach Anspruch 1, **dadurch gekennzeichnet, dass** die Mittel zur Blockierung der Abtriebswelle (22) des Verbrennungsmotors (14) eine Bremse (40) aufweisen, welche gemäß einem aktiven Blockiermodus und einem inaktiven Modus auf ein Motor-Schwungrad (38) wirkt, welches in Drehung mit der Abtriebswelle (22) des Verbrennungsmotors (14) verbunden ist.

3. Antriebsgruppe (10) nach einem der Ansprüche 1 oder 2, **dadurch gekennzeichnet, dass** das erste Umlaufgetriebe (T1) koaxial zu dem zweiten Umlaufgetriebe (T2) ist, dass der erste Planetenradträger (PS1) in Drehung mit dem zweiten Planetenrad (P2) verbunden ist und dass der erste Kranz (C1) in Drehung mit dem zweiten Kranz (C2) verbunden ist.

4. Antriebsgruppe (10) nach Anspruch 3, **dadurch gekennzeichnet, dass** der erste Kranz (C1) und der zweite Kranz (C2) einen gemeinsamen Kranz (C) bilden und dass der erste Planetenradträger (PS1) und das zweite Planetenrad (P2) eine gemeinsame Nabe (M) bilden.

5. Antriebsgruppe (10) nach Anspruch 4, **dadurch gekennzeichnet, dass** der den zwei Umlaufgetrieben (T1, T2) gemeinsame Kranz (C) in Drehung mit der Abtriebswelle (24) des elektrischen Motors (16) verbunden ist, das erste Planetenrad (P1) in Drehung mit der Welle (28) des Rotors des Generators (18) verbunden ist, die gemeinsame Nabe (M) mit der Abtriebswelle (22) des Verbrennungsmotors (14) verbunden ist und der zweite Planetenradträger (PS2) in Drehung mit Rädern des Fahrzeugs verbunden ist.

6. Antriebsgruppe (10) nach Anspruch 5 in Kombination mit Anspruch 2, **dadurch gekennzeichnet, dass** das elektronische Modul (34) fähig ist, einen reinen elektrischen Betriebsmodus zu steuern, in welchem die Bremse (40) des Motor-Schwungrads (38) aktiv ist und der Generator (18) nicht belastet ist.

7. Antriebsgruppe (10) nach Anspruch 5 in Kombination mit Anspruch 2, **dadurch gekennzeichnet, dass** das elektronische Modul (34) fähig ist, einen Betriebsmodus zum Anlassen des Verbrennungsmotors (14) durch den elektrischen Motor (16) zu steuern, in welchem die Bremse (40) des Motor-Schwungrads (38) inaktiv ist und der Generator (18) belastet ist.

8. Antriebsgruppe (10) nach Anspruch 5 in Kombination mit Anspruch 2, **dadurch gekennzeichnet, dass** das elektronische Modul (34) fähig ist, einen hybriden, freien Betriebsmodus zu steuern, in welchem die zwei Motoren (14, 16) laufen, die Bremse (40) des Motor-Schwungrads (38) inaktiv ist und der Generator (18) belastet ist.

9. Antriebsgruppe (10) nach Anspruch 4, **dadurch gekennzeichnet, dass** das elektronische Modul (34), wenn das Fahrzeug gestoppt ist, fähig ist, einen Betriebsmodus zum Wiederaufladen der Speicherbatterie (36) zu steuern, in welchem der Verbrennungsmotor (14) läuft und die Bremse (40) des Motor-Schwungrads (38) inaktiv ist, der Generator (18) belastet ist und der elektrische Motor (16) als Stromgenerator verwendet wird.

10. Antriebsgruppe (10) nach irgendeinem der vorangegangenen Ansprüche, **dadurch gekennzeichnet, dass** sie eine Bremse (42) zum Blockieren der Welle (28) des Rotors des Generators (18) aufweist, die fähig ist, gemäß einem aktiven Blockiermodus und gemäß einem inaktiven Modus durch das elektronische Modul (34) gesteuert zu werden.

11. Antriebsgruppe (10) nach Anspruch 9 in Kombination mit den Ansprüchen 2 und 5, **dadurch gekennzeichnet, dass** das elektronische Modul (34) fähig ist, einen hybriden blockierten Betriebsmodus zu steuern, in welchem die zwei Motoren (14, 16) laufen, die Bremse (40) des Motor-Schwungrads (38) inaktiv ist, die Bremse (42) der Rotorwelle (28) des Generators (18) aktiv ist und der Generator (18) belastet ist.

12. Antriebsgruppe (10) nach Anspruch 5, **dadurch gekennzeichnet, dass** die Drehverbindung der Abtriebswelle des elektrischen Motors (16) mit dem Kranz (C) und die Drehverbindung des zweiten Planetenradträgers (PS2) mit der Brücke mittels Übertragungsbauteilen, wie z.B. Zahnriemen oder Ketten (28, 30), realisiert sind.

13. Antriebsgruppe (10) nach Anspruch 12, **dadurch gekennzeichnet; dass** sie ein gemeinsames Gehäuse (12) aufweist, welches die zwei Umlaufgetriebe (T1; T2), die Übertragungsbauteile (28, 30) und eine Brücke (20) aufnimmt und an welchem der elektrische Motor (16), der Generator (18) und der Verbrennungsmotor (14) befestigt sind.

## Claims

1. A power unit (10) for a vehicle with hybrid motorisation operating in a plurality of modes, of the type comprising a first epicyclic gear train (T1) which comprises elements such as a first annulus (C1), a first sun gear (P1), a first planetary gear carrier (PS1) and at least one first planetary gear (S1) which are connected in respect of rotation to members of the power unit (10) such as an output shaft (24) of an electric motor (16), an output shaft (22) of a heat engine (14), a shaft (28) of the rotor of an alternator (18) and a power output (PS1) for transmitting the motive power to the wheels of the vehicle by way of an axle (20) and of the type in which an electronic module (34) for managing the charge of a battery of accumulators (36) controls in particular in respect of torque and speed the operation of the electric motor (16) and the alternator (18) which is capable of being put under load to recharge the battery of accumulators (36),
**characterised in that** the power unit (10) comprises a second epicyclic gear train (T2) which comprises elements such as a second annulus (C2), a second sun gear (P2), a second planetary gear carrier (PS2) and at least one second planetary gear (S2), of which one (C2) is connected in respect of rotation to the output shaft (24) of the electric motor (16) and of which the others are connected to the power output (PS1) of the first epicyclic gear train (T1) and to the axle (20) and that the electronic module (34) controls the operation of the heat engine (14) and means for locking the output shaft (22) of the heat engine.

2. A power unit (10) according to claim 1 **characterised in that** the means for locking the output shaft (22) of the heat engine (14) comprise a brake (40) which acts in accordance with an active locking mode and an inactive mode on an engine flywheel (38) connected in respect of rotation to the output shaft (22) of the heat engine (14).

3. A power unit (10) according to one of claims 1 and 2 **characterised in that** the first epicyclic gear train (T1) is coaxial with respect to the second epicyclic gear train (T2), that the first planetary gear carrier (PS1) is connected in respect of rotation to the second sun gear (P2) and that the first annulus (C1) is connected in respect of rotation to the second annulus (C2).

4. A power unit (10) according to claim 3 **characterised in that** the first annulus (C1) and the second annulus (C2) form a common annulus (C) and that the first planetary gear carrier (PS1) and the second sun gear (P2) form a common hub (M).

5. A power unit (10) according to claim 4 **characterised in that** the annulus (C) common to the two epicyclic gear trains (T1, T2) is connected in respect of rotation to the output shaft (24) of the electric motor (16), the first sun gear (P1) is connected in respect of rotation to the shaft (28) of the rotor of the alternator (18), the common hub (M) is connected to the output shaft (22) of the heat engine (14) and the second planetary gear carrier (PS2) is connected in respect of rotation to the wheels of the vehicle.

6. A power unit (10) according to claim 5 in combination with claim 2 **characterised in that** the electronic module (34) is capable of actuating a pure electrical mode of operation in which the brake (40) of the engine flywheel (38) is active and the alternator (18) is not under load.

7. A power unit (10) according to claim 5 in combination with claim 2 **characterised in that** the electronic module (34) is capable of actuating a starting mode of operation of the heat engine (14) by the electric motor (16), in which the brake (40) of the engine flywheel (38) is inactive and the alternator (18) is under load.

8. A power unit (10) according to claim 5 in combination with claim 2 **characterised in that** the electronic module (34) is capable of actuating a free hybrid mode of operation in which the engine and the motor (14, 16) are running, the brake (40) of the engine flywheel (38) is inactive and the alternator (18) is under load.

9. A power unit (10) according to claim 4 **characterised in that** the electronic module (34) is capable of actuating, when the vehicle is stopped, a mode of operation for recharging the battery of accumulators (36), in which the heat engine (14) is running and the brake (40) of the engine flywheel (38) is inactive, the alternator (18) is under load and the electric motor (16) is used as a current generator.

10. A power unit (10) according to any one of the preceding claims **characterised in that** it comprises a brake (42) for locking the shaft (28) of the rotor of the alternator (18), which is capable of being actuated in accordance with an active locking mode and in accordance with an inactive mode by the electronic module (34).

11. A power unit (10) according to claim 9 in combination with claims 2 and 5 **characterised in that** the electronic module (34) is capable of actuating a locked hybrid mode of operation in which the engine and the motor (14, 16) are running, the brake (40) of the engine flywheel (38) is inactive, the brake (42) of the shaft of the rotor (28) of the alternator (18) is active and the alternator (18) is under load.

12. A power unit (10) according to claim 5 **characterised in that** the connection in respect of rotation of the output shaft of the electric motor (16) to the annulus (12) and the connection in respect of rotation of the second planetary gear carrier (PS2) to the axle are implemented by way of transmission members such as toothed belts or chains (28, 30).

13. A power unit (10) according to claim 12 **characterised in that** it comprises a common case (20) which accommodates the two epicyclic gear trains (T1, T2), the transmission members (28, 30) and an axle (20) and on which the electric motor (16), the alternator (18) and the heat engine (14) are fixed.
